# EUROPÄISCHE PATENTSCHRIFT

(11) **EP 0 777 705 B1**
(45) Veröffentlichungstag und Bekanntmachung des Hinweises auf die Patenterteilung: **25.11.1998**
(21) Anmeldenummer: 95929084.2
(22) Anmeldetag: 04.08.1995
(51) Int. Cl.: C09B 69/10, D21H 21/28

(54) **OLIGOMERE TRIARYLMETHANFARBSTOFFE**
OLIGOMER TRIARYLMETHANE DYES
COLORANTS DU TYPE TRIARYLMETHANE OLIGOMERES

(30) Priorität: 19.08.1994 DE 4429549
(43) Veröffentlichungstag der Anmeldung: 11.06.1997
(73) Patentinhaber: BASF AKTIENGESELLSCHAFT, 67056 Ludwigshafen (DE)
(72) Erfinder: SCHRÖDER, Gunter-Rudolf, D-68259 Mannheim (DE); MAYER, Udo, D-67227 Frankenthal (DE); BAUS, Ulf, D-69221 Dossenheim (DE); DIX, Johannes, Peter, D-67273 Weisenheim (DE)
(86) Internationale Anmeldenummer: EP9503111
(87) Internationale Veröffentlichungsnummer: WO9606139

(56) Entgegenhaltungen:
- EP-A- 0 031 070
- FR-A- 2 401 958

## Beschreibung

Die vorliegende Erfindung betrifft neue Triarylmethane der Formel I 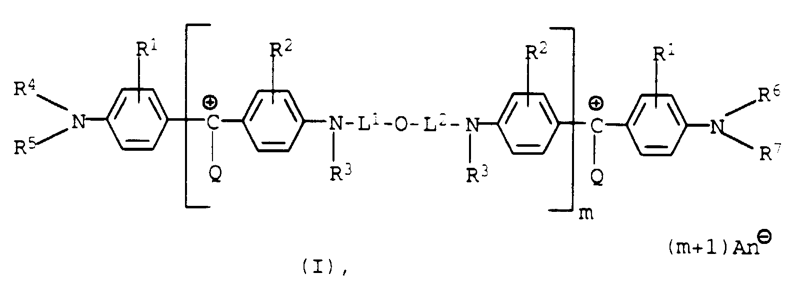 in der
- m: 1 bis 100,
- L¹ und L²: unabhängig voneinander jeweils C₂-C₄-Alkylen
- R¹ und R²: unabhängig voneinander jeweils Wasserstoff, C₁-C₄-Alkyl, C₁-C₄-Alkoxy oder Halogen,
- R³: jeweils Wasserstoff oder C₁-C₄-Alkyl, das gegebenenfalls durch Hydroxy, C₁-C₄-Alkoxy, Halogen oder Cyano substituiert ist,
- R⁴, R⁵, R⁶ und R⁷: unabhängig voneinander jeweils Wasserstoff, C₁-C₄-Alkyl, das gegebenenfalls durch Hydroxy, C₁-C₄-Alkoxy, Halogen oder Cyano substituiert ist, gegebenenfalls substituiertes Phenyl oder einen Rest der Formel 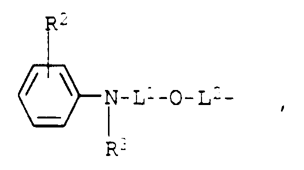 worin
L¹, L², R² und R³ jeweils die obengenannte Bedeutung besitzen,
- Q: einen Rest der Formel 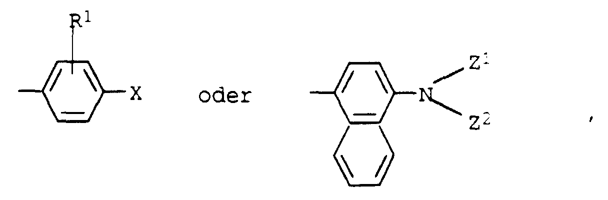 worin
R¹ die obengenannte Bedeutung besitzt,
X für Wasserstoff, C₁-C₄-Alkyl, C₁-C₄-Alkoxy oder einen Rest der Formel -NZ¹Z² und
Z¹ und Z² unabhängig voneinander jeweils für Wasserstoff oder C₁-C₄-Alkyl, das gegebenenfalls durch Hydroxy, C₁-C₄-Alkoxy, Halogen oder Cyano substituiert ist, oder gegebenenfalls substituiertes Phenyl stehen, und
- An^{⊖}: das Äquivalent eines Anions bedeuten,
sowie deren Verwendung zum Färben oder Bedrucken von polymerem Material.

Aus der EP-A-31 070 sind bereits oligomere Triarylmethanfarbstoffe bekannt, die durch Alkylenbrücken verknüpft sind. Es hat sich jedoch gezeigt, daß die dort genannten Farbstoffe noch Nachteile in ihren anwendungstechnischen Eigenschaften aufweisen.

Aufgabe der vorliegenden Erfindung war es, neue oligomere Triarylmethanfarbstoffe bereitzustellen. Die neuen Farbstoffe sollten sich in vorteilhafter Weise zum Färben oder Bedrucken von polymerem Material, insbesondere von Papierstoffen, eignen und sollten leicht zugänglich sein.

Demgemäß wurden die eingangs näher bezeichneten Triarylmethane der Formel I gefunden.

In den Triarylmethanen der Formel I kann die positive Ladung auch mesomer verschoben sein.

Alle in der obengenannten Formel I auftretenden Alkyl- oder Alkylengruppen können sowohl geradkettig als auch verzweigt sein.

Wenn in der obengenannten Formel I substituierte Alkylreste auftreten, so weisen sie in der Regel 1 bis 3 Substituenten auf.

Wenn in der obengenannten Formel I substituierte Phenylreste auftreten, so können als Substituenten z.B. C₁-C₄-Alkyl, C₁-C₄-Alkoxy oder Halogen in Betracht kommen. Die Phenylringe weisen dann in der Regel 1 bis 3 Substituenten auf.

Die Reste L¹ können dabei, ebenso wie die Reste L², R¹, R², R³, R⁴, R⁵, R⁶, R⁷ und Q, untereinander jeweils gleich oder verschieden sein.

Reste L¹ und L² sind z.B. (CH₂)₂, (CH₂)₃, (CH₂)₄, CH(CH₃)CH₂ oder CH(CH₃)CH(CH₃).

Reste R¹, R², R³, R⁴, R⁵, R⁶, R⁷, X, Z¹ und Z² sind z.B. Methyl, Ethyl, Propyl, Isopropyl, Butyl, Isobutyl, sec-Butyl oder tert-Butyl.

Reste R³, R⁴, R⁵, R⁶, R⁷, Z¹ und Z² sind weiterhin z.B. 2-Hydroxyethyl, 2- oder 3-Hydroxypropyl, 2- oder 4-Hydroxybutyl, 2-Methoxyethyl, 2- oder 3-Methoxypropyl, 2- oder 4-Methoxybutyl, 2-Ethoxyethyl, 2- oder 3-Ethoxypropyl, 2- oder 4-Ethoxybutyl, Fluormethyl, Chlormethyl, Difluormethyl, Dichlormethyl, Trifluormethyl, Trichlormethyl, 2-Fluorethyl, 2-Chlorethyl, 2- oder 3-Fluorpropyl, 2- oder 3-Chlorpropyl, 2- oder 4-Fluorbutyl, 2- oder 4-Chlorbutyl, Cyanomethyl, 2-Cyanoethyl, 2- oder 3-Cyanopropyl oder 2- oder 4-Cyanobutyl.

Reste R¹, R² und X sind weiterhin z.B. Methoxy, Ethoxy, Propoxy, Isopropoxy, Butoxy, Isobutoxy oder sec-Butoxy.

Reste R¹ und R² sind weiterhin z.B. Fluor, Chlor oder Brom.

Reste R⁴, R⁵, R⁶, R⁷, Z¹ und Z² sind weiterhin z.B. Phenyl, 2-, 3- oder 4-Methylphenyl, 2,4-Dimethylphenyl, 2-, 3- oder 4-Ethylphenyl, 2-, 3- oder 4-Methoxyphenyl, 2,4-Dimethoxyphenyl, 2-, 3- oder 4-Chlorphenyl oder 2,4-Dichlorphenyl.

Geeignete Anionen, von denen sich An^{⊖} ableitet sind z.B. Fluorid, Chlorid, Bromid, Iodid, Perchlorat, Hydrogensulfat, Sulfat, Aminosulfat, Nitrat, Dihydrogenphosphat, Phosphat, Hydrogencarbonat, Carbonat, Methosulfat, Ethosulfat, Cyanat, Thiocyanat, Tetrachlorozinkat, Borat, Tetrafluoroborat, Acetat, Cyanoacetat, Hydroxyacetat, Aminoacetat, Methylaminoacetat, Mono-, Di- oder Trichloracetat, 2-Chlorpropionat, 2-Hydroxypropionat, Glycolat, Thioglycolat, Thioacetat, Phenoxyacetat, Trimethylacetat, Valeriat, Palmitat, Oleat, Acrylat, Oxalat, Malonat, Crotonat, Succinat, Citronat, Methylenbisthioglycolat, Ethylenbisiminoacetat, Nitrilotriacetat, Fumarat, Maleat, Benzoat, Methylbenzoat, Chlorbenzoat, Dichlorbenzoat, Hydroxybenzoat, Aminobenzoat, Phthalat, Terephthalat, Indolylacetat, Chlorbenzolsulfonat, Benzolsulfonat, Toluolsulfonat, Biphenylsulfonat oder Chlortoluolsulfonat.

Bevorzugt sind Triarylmethane der Formel I, in der m 2 bis 30 bedeutet.

Weiterhin bevorzugt sind Triarylmethane der Formel I, in der L¹ und L² unabhängig voneinander jeweils C₂- oder C₃-Alkylen bedeuten.

Weiterhin bevorzugt sind Triarylmethane der Formel I, in der R¹ und R² unabhängig voneinander jeweils Wasserstoff oder C₁-C₄-Alkyl bedeuten.

Weiterhin bevorzugt sind Triarylmethane der Formel I, in der R³ jeweils C₁-C₂-Alkyl bedeutet.

Weiterhin bevorzugt sind Triarylmethane der Formel I, in der R⁴ und R⁶ unabhängig voneinander jeweils C₁-C₄-Alkyl und R⁵ und R⁷ unabhängig voneinander jeweils C₁-C₄-Alkyl, das gegebenenfalls durch Hydroxy oder Cyano substituiert ist, oder einen Rest der Formel 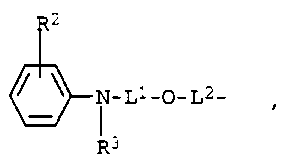 worin L¹, L², R² und R³ jeweils die obengenannte Bedeutung besitzen, bedeuten.

Weiterhin bevorzugt sind Triarylmethane der Formel I, in der Q einen Rest der Formel 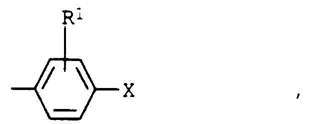 bedeutet, worin R¹ und X jeweils die obengenannte Bedeutung besitzen.

Besonders bevorzugt sind Triarylmethane der Formel I, in der Q einen Rest der Formel 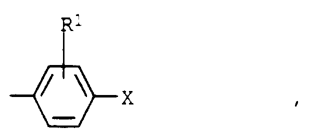 bedeutet, worin R¹ für Wasserstoff oder C₁-C₄-Alkyl und X für Wasserstoff oder einen Rest der Formel -NZ¹Z² stehen, wobei Z¹ und Z² unabhängig voneinander jeweils die Bedeutung der C₁-C₄-Alkyl, das gegebenenfalls durch Hydroxy oder Cyano substituiert ist, besitzen.

Die erfindungsgemäßen Farbstoffe der Formel I können nach an sich bekannten Methoden, wie sie bei der Herstellung von Triarylmethanen Anwendung finden, erhalten werden.

Beispielsweise kann man ein verdoppeltes Anilin der Formel II 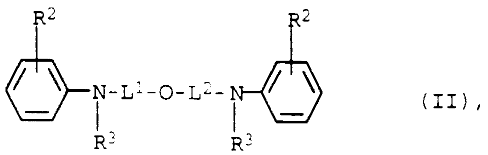 in der L¹, L², R² und R³ jeweils die obengenannte Bedeutung besitzen, zunächst mit Formaldehyd und anschließend unter oxidierenden Bedingungen mit einer Verbindung der Formel III

Q-H (III)

umsetzen, in der Q die obengenannte Bedeutung besitzt, mit der Maßgabe, daß die Verbindung Q-H einen Rest NZ¹Z² aufweist.

Als Kettenabbruchmolekül wirkt in diesem Fall das verdoppelte Anilin II.

Man gelangt auf diese Weise zu Triarylmethanen der Formel I, in der R⁵ und R⁷ jeweils einen Rest der Formel 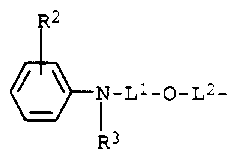 bedeutet, worin L¹, L², R² und R³ jeweils die obengenannte Bedeutung besitzen.

Solche Triarylmethane können auch durch die Formel Ia 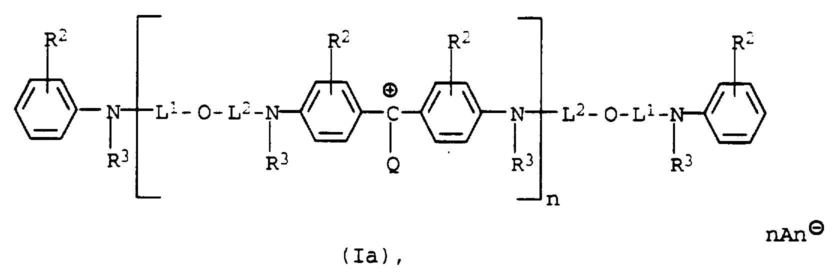 charakterisiert werden, worin L¹, L², R², R³, Q und An^{⊖} jeweils die obengenannte Bedeutung besitzen und n 2 bis 101, vorzugsweise 3 bis 21, bedeutet.

Man kann die Umsetzung aber auch in Gegenwart von anderen Kettenabbruchmolekülen durchführen. Solche Kettenabbruchmoleküle sind z.B. Aniline der Formel IV 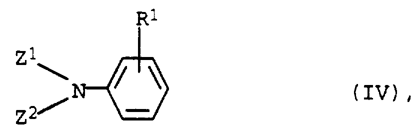 in der R¹, Z¹ und Z² jeweils die obengenannte Bedeutung besitzen.

In diesem Fall kann man so vorgehen, daß man zunächst das verdoppelte Anilin II gleichzeitig mit einem Anilin der Formel IV und Formaldehyd und anschließend unter oxidierenden Bedingungen mit einem Anilin der Formel III umsetzt.

Man erhält auf diese Weise Triarylmethane der Formel Ib 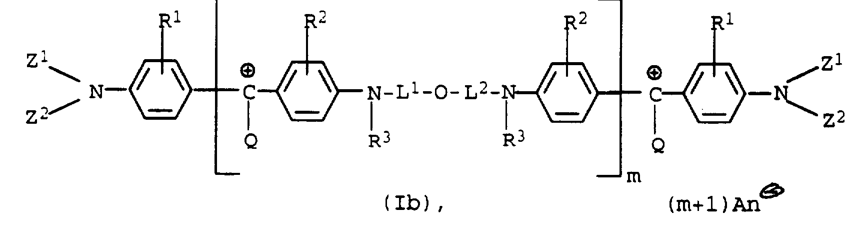 in der m, L¹, L², Q, R¹, R², R³, Z¹, Z² und An^{⊖} jeweils die obengenannte Bedeutung besitzen.

Man kann aber auch aus Aldehyden der Formel V

Q―CHO (V),

in der Q die obengenannte Bedeutung besitzt, und Harnstoff Bisbenzylidenharnstoffe der Formel VI

Q―CH=N―CO―N=CH―Q (VI),

in der Q jeweils die obengenannte Bedeutung besitzt, herstellen, und diese mit dem dimeren Anilin II und gegebenenfalls anschließend mit einem Anilin der Formel IV umsetzen. Um die resultierende Leukoverbindung in die Farbstofform überzuführen, erfolgt dann noch eine Behandlung unter oxidierenden Bedingungen.

Die erfindungsgemäßen Triarylmethane der Formel I können für sich alleine, in Gemischen untereinander und zusammen mit anderen kationischen oder anionischen Verbindungen in Form ihrer Lösungen oder in Form von Pulvern oder Granulaten angewendet werden.

Sie eignen sich vorteilhaft zum Färben oder Bedrucken von polymerem Material, insbesondere von Papierstoffen, aber auch von Cellulose, Baumwolle, Leder, Bastfasern, Hanf, Flachs, Sisal, Jute, Kokos oder Stroh.

Bei der Herstellung von Farbstoffpräparationen, enthaltend die neuen Triarylmethane der Formel I, ist die Verwendung von Polymeren, wie Polyacrylsäuren, Polyacrylsäurederivaten, Polyvinylaminen, Polyvinylamiden, Polyvinylacetaten, Polyvinylalkoholen, Polyvinylpyrrolidonen, Polysiloxanen oder Copolymeren der jeweiligen Monomeren hervorzuheben. Desgleichen können Oligomere des Ethylenimins, Ethylenoxids oder Propylenoxids oder Derivate dieser Oligomeren zur Anwendung kommen. Von großer Bedeutung sind auch N-alkylierte Pyrrolidone oder N-(2-Hydroxyethyl)pyrrolidone.

Die Triarylmethane können vorzugsweise bei der Herstellung von in der Masse gefärbtem, geleimtem und ungeleimtem Papier verwendet werden. Sie können ebenfalls zum Färben von Papier nach dem Tauchverfahren angewendet werden.

Das Färben von Papier, Leder oder Cellulose erfolgt nach an sich bekannten Methoden.

Die neuen Farbstoffe oder ihre Präparationen färben das Abwasser bei der Papierherstellung praktisch gar nicht oder nur wenig an, was für die Reinhaltung der Gewässer besonders günstig ist. Dies gilt insbesondere auch bei der Färbung von holzfreiem Zellstoff. Sie sind hoch substantiv, melieren nicht, wenn sie auf Papier gefärbt sind und sind weitgehend pH-unempfindlich. Die Färbungen auf Papier zeichnen sich durch eine gute Lichtechtheit aus. Nach längerem Belichten ändert sich die Nuance Ton-in-Ton. Außerdem weisen die erfindungsgemäßen Farbstoffe eine gute Löslichkeit auf.

Die gefärbten Papiere, die eine gute Bleichbarkeit aufweisen, sind naßecht, nicht nur gegen Wasser, sondern ebenfalls gegen Milch, Seifenwasser, Natriumchloridlösungen, Fruchtsäfte oder gesüßte Mineralwasser und wegen ihrer guten Alkoholechtheit auch gegen alkoholische Getränke beständig.

Mit den neuen Farbstoffen kann man auch Polyacrylnitriltextilien oder durch anionische Gruppen modifizierte Polyamid- oder Polyestertextilien färben, foulardieren oder bedrucken. Außerdem eignen sie sich für das Ink-Jet-Verfahren sowie für die Herstellung von Kugelschreiberpasten oder Farbbändern.

Die folgenden Beispiele sollen die Erfindung näher erläutern.

### Beispiel 1

In einem Rührkolben mit Destillationsbrucke wurden 2805 g (17 mol) N-Ethyl-N-(2-hydroxyethyl)anilin mit 25 g 50 gew.-%iger hypophosphoriger Saure (H₃PO₂) versetzt und unter Stickstoff auf 200 bis 230°C erhitzt. Innerhalb von 6 h destillierten 193 g eines zweiphasigen Wasser/Anilin-Gemisches ab. Man ließ auf 80°C abkühlen und erhitzte innerhalb von 2,5 h unter vermindertem Druck erneut auf 210°C. Es wurde ein Endvakuum von < 133,3 Pa (1 torr) erreicht. Dabei wurden 37 g Destillat bestehend aus nicht umgesetztem Ausgangsmaterial aufgefangen. Die als Rückstand verbleibende Verbindung der Formel 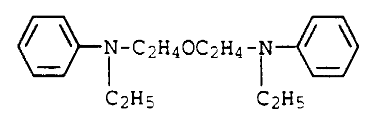 kann ohne weitere Reinigung für Farbstoffsynthesen verwendet oder zunächst auch zwischenisoliert werden.

Ausbeute 2576 g

¹H-NMR (CDCl₃): 1,15 ppm (t, 6H, CH₃), 3,50 ppm (m, 6H, CH₂), 6,67 ppm (m, 6H, Ar-H), 6,67 ppm (m, 4H, Ar-H).

### Beispiel 2

31,2 g (0,1 mol) der Verbindung aus Beispiel 1 wurden in 100 g Eisessig mit 7,0 g (0,07 mol) wäßriger Formaldehydlösung (30 gew.-%ig) über Nacht bei Raumtemperatur gerührt. Zu dieser Lösung gab man 8,4 g (0,07 mol) N,N-Dimethylanilin und erhitzte auf 43 bis 44°C. Nach Erreichen der Temperatur wurden 1,0 g Chloranil und 1,0 g des Eisenkomplexes von Dibenzotetraaza[14]-annulen zugegeben. Dem Reaktionsansatz wurden unter starkem Rühren innerhalb von 1,5 h mittels einer Gasbürette 1,5 l Sauerstoff (Theorie: 1,57 l) zugeführt. Dabei wurde die Temperatur auf 43 bis 44°C gehalten. Nach dem Filtrieren erhielt man eine ca. 16 gew.-%ige Lösung des Farbstoffs der Formel

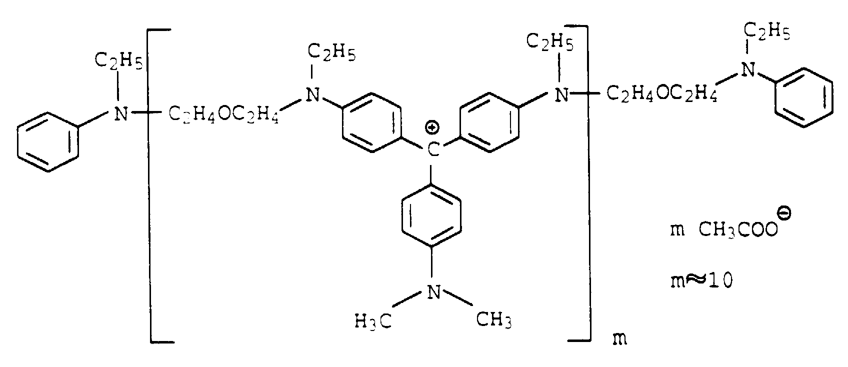

In analoger Weise werden die in der folgenden Tabelle 1 aufgeführten Verbindungen erhalten.

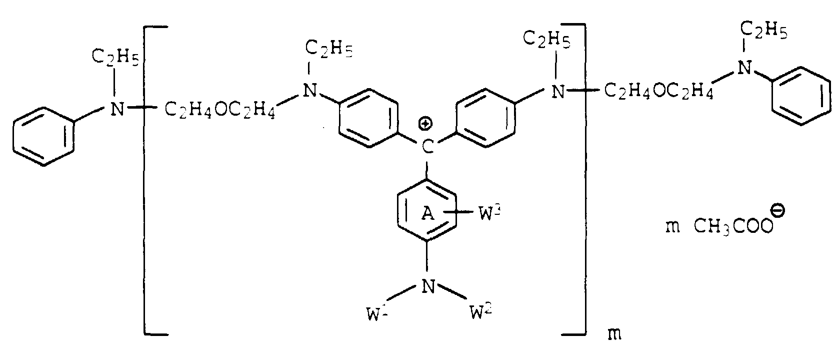

**Tabelle 1**

| Bsp.-Nr. | W¹ | W² | W³ | m | Ring A | λₘₐₓ in Ethanol | Gehalt der Farbstofflösung [Gew.-%] |
|---|---|---|---|---|---|---|---|
| 3 | C₂H₅ | C₂H₄OH | H | ca. 10 | nicht anelliert | 589 | 20 |
| 4 | CH₃ | C₂H₄OH | H | ca. 10 | nicht anelliert | 584 | 21 |
| 5 | H | C₂H₅ | 2-CH₃ | ca. 10 | nicht anelliert | 588 | 21 |
| 6 | C₂H₄CN | C₂H₄OH | H | ca. 10 | nicht anelliert | 591 | 20 |
| 7 | C₂H₄OH | C₂H₄OH | H | ca. 10 | nicht anelliert | 592 | 20 |
| 8 | H | C₆H₅ | H | ca. 10 | benzo-anelliert | 594 | 20 |

### Beispiel 9

31,8 g (0,3 mol) Benzaldehyd und 9,0 g (0,15 mol) Harnstoff wurden bei 25°C in 200 ml Eisessig gelöst und 1 h bei 25°C gehalten. Anschließend versetzte man mit 43,0 g (0,14 mol) der in Beispiel 1 beschriebenen Verbindung und erhitzte für 1 h auf 60°C. Nach erneuter Zugabe von 43,0 g (0,14 mol) der in Beispiel 1 beschriebenen Verbindung wurde 3 h auf 90°C erhitzt und dann auf 40°C abgekühlt und wie in Beispiel 2 beschrieben mit 3,1 l Sauerstoff oxidiert. Man erhieit so eine wassermischbare 40 gew.-%ige Flüssigeinstellung des Farbstoffes der Formel 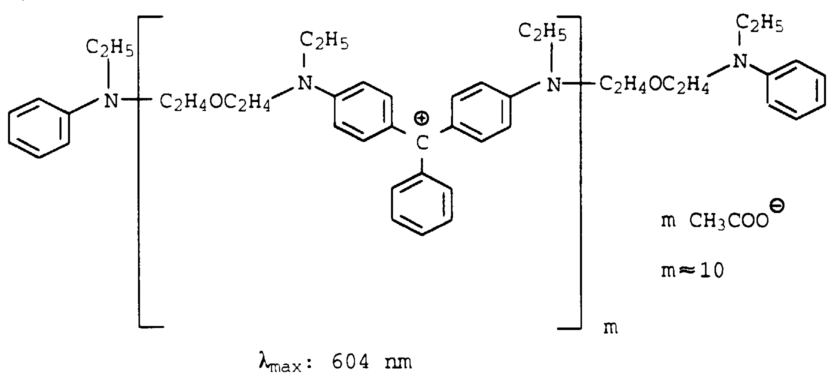 In analoger Weise werden die in der folgenden Tabelle 2 aufgeführten Farbstoffe erhalten.

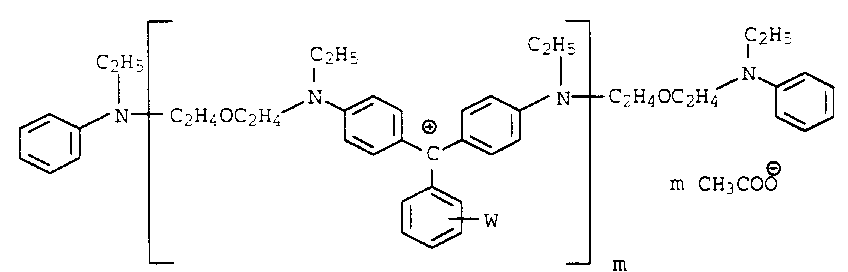

**Tabelle 2**

| Bsp.-Nr. | W | m | Gehalt der Farbstofflösung [Gew.-%] |
|---|---|---|---|
| 10 | 2-Cl | ca. 10 | 40 |
| 11 | 2-CH₃ | ca. 10 | 40 |
| 12 | 4-CH₃ | ca. 10 | 40 |

### Beispiel 13

701 g (2,23 mol) der in Beispiel 1 beschriebenen Verbindung und 105,1 g (0,64 mol) N-Ethyl-N-(2-hydroxyethyl)anilin wurden in 2000 g Eisessig gelöst und auf 60°C erhitzt. Dann ließ man innerhalb von 30 min 200 g (2 mol) 30 gew.-%ige wäßrige Formaldehydlösung zutropfen und anschließend weitere 60 min bei 60°C nachrühren. Man ließ dann auf 45°C abkühlen und gab 330 g (2 mol) N-Ethyl-N-(2-hydroxyethyl)anilin zu und erhitzte auf 43 bis 44°C. Nach Erreichen der Temperatur wurden 20 g (0,08 mol) Chloranil und 20 g des Eisenkomplexes von Dibenzotetraaza[14]annulen zugegeben. Nun leitete man 7 h lang unter starkem Rühren Luft (200 l/h) mittels eines Einleitungsrohrs in den Reaktionskolben. Dabei wurde die Temperatur bei 43 bis 44°C gehalten. Es wurden 3000 g einer 30 gew.-%igen Lösung des Farbstoffs der Formel 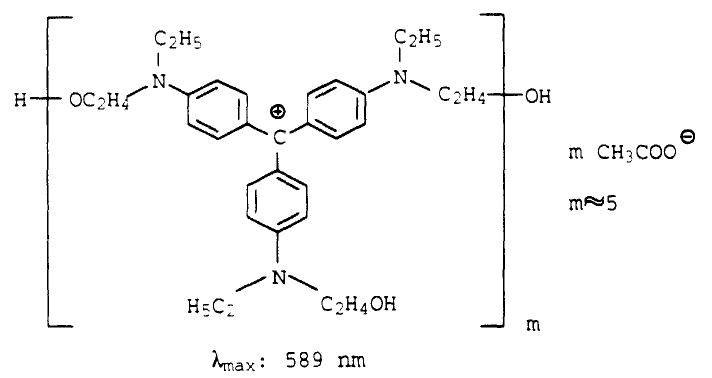 erhalten.

### Beispiel 14

701 g (2,23 mol) der in Beispiel 1 beschriebenen Verbindung und 70,1 g (0,425 mol) N-Ethyl-N-(2-hydroxyethyl)anilin wurden in 2000 g Eisessig gelöst und auf 60°C erhitzt. Dann wurden innerhalb von 30 min 200 g (2 mol) 30 gew.-%ige wäßrige Formaldehydlösung zudosiert. Man ließ weitere 60 min bei 60°C nachrühren und dann auf 45°C abkühlen. Zu dieser Lösung gab man 358,5 g (2 mol) N-Ethyl-N-(2-hydroxyethyl)-3-methylanilin und erhitzte auf 43 bis 44°C. Nach Erreichen der Temperatur wurden 20 g (0,08 mol) Chloranil und 20 g des Eisenkomplexes von Dibenzotetraaza[14]annulen zugegeben. Nun leitete man 7 h lang unter starkem Rühren Luft (200 l/h) über ein Einleitungsrohr in den Reaktionskolben. Dabei wurde die Temperatur auf 43 bis 44°C gehalten. Nach dem Abkühlen und Filtrieren erhielt man 3000 g einer ca. 33 gew.-%igen Lösung des Farbstoffs der Formel

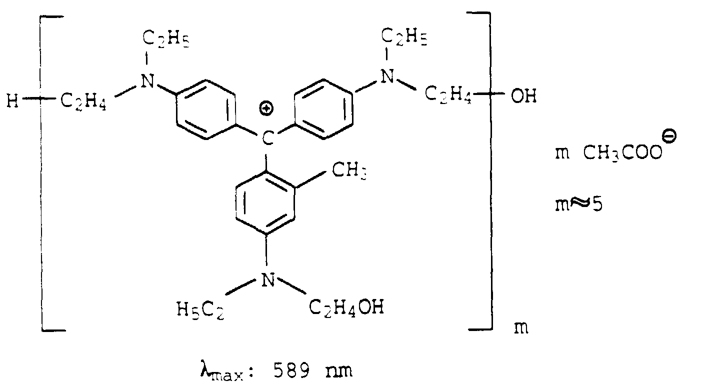

### Beispiel 15

52,5 g (0,167 mol) der in Beispiel 1 beschriebenen Verbindung und 5,25 g (0,03 mol) N-Ethyl-N-(2-hydroxyethyl)-3-methylanilin wurden in 150 g Eisessig gelöst und auf 60°C erhitzt. Dann wurden innerhalb von 30 min 15 g (0,15 mol) 30 gew.-%ige wäßrige Formaldehydlösung zudosiert. Man ließ weitere 60 min bei 60°C nachrühren und dann auf 45°C abkühlen. Zu dieser Lösung gab man 26,9 g (0,15 mol) N-Ethyl-N-(2-hydroxyethyl)-3-methylanilin und erhitzte auf 43 bis 44°C. Nach Erreichen der Temperatur wurden 1,5 g (0,08 mol) Chloranil und 1,5 g des Eisenkomplexes von Dibenzotetraaza[14]annulen zugegeben. Dem Reaktionsansatz wurden unter starkem Rühren innerhalb von ca. 2 h mittels einer Gasbürette 3,4 l Sauerstoff (Theorie: 3,36 l) zugeführt. Dabei wurde die Temperatur bei 43 bis 44°C gehalten. Nach dem Filtrieren erhielt man eine ca. 33 gew.-%ige Lösung des Farbstoffs der Formel

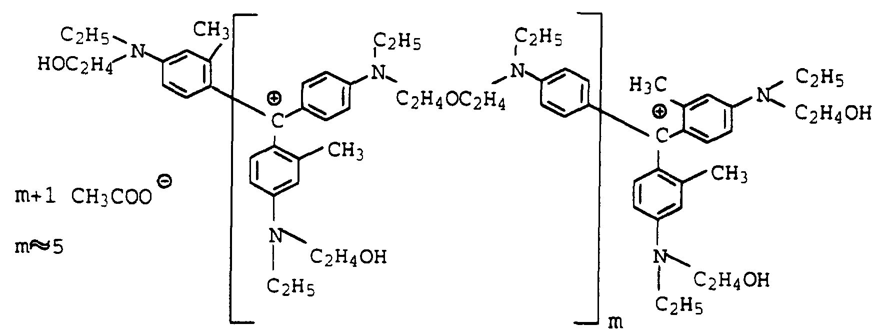

### Beispiel 16

Die Kettenlänge m wurde für eine oligomere Diphenylmethanverbindung der Formel 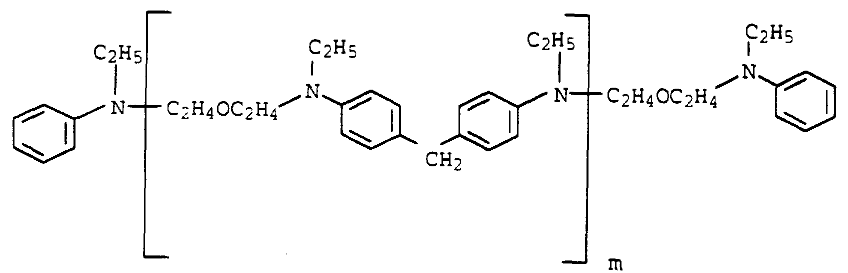 bestimmt, die wie folgt hergestellt wurde:

Man ließ 31,2 g (0,1 mol) der in Beispiel 1 beschriebenen Verbindung mit 10,0 g (0,1 mol) 30 gew.-%iger wäßriger Formaldehydlösung in 100 ml Essigsäure über Nacht bei Raumtemperatur rühren. Die Reaktionsmischung wurde in Wasser aufgenommen und mit Chloroform extrahiert. Die organische Phase wurde getrocknet und eingeengt.

Das dampfdruckosmometrisch bestimmte Molekulargewicht betrug ca. 4500, was einer Kettenlänge von ungefähr 14 entspricht.

## Patentansprüche

1. Triarylmethane der Formel I 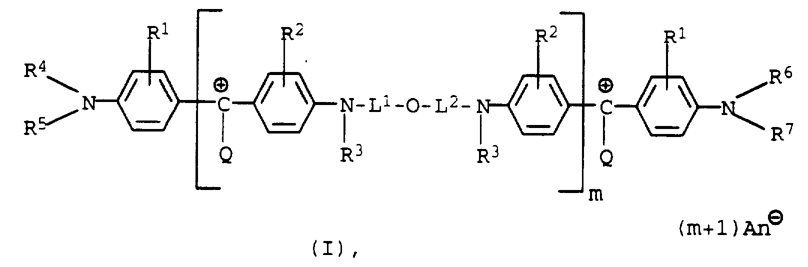 in der
m 1 bis 100,
L¹ und L² unabhängig voneinander jeweils C₂-C₄-Alkylen
R¹ und R² unabhängig voneinander jeweils Wasserstoff, C₁-C₄-Alkyl, C₁-C₄-Alkoxy oder Halogen,
R³ jeweils Wasserstoff oder C₁-C₄-Alkyl, das gegebenenfalls durch Hydroxy, C₁-C₄-Alkoxy, Halogen oder Cyano substituiert ist,
R⁴, R⁵, R⁶ und R⁷ unabhängig voneinander jeweils Wasserstoff, C₁-C₄-Alkyl, das gegebenenfalls durch Hydroxy, C₁-C₄-Alkoxy, Halogen oder Cyano substituiert ist, gegebenenfalls substituiertes Phenyl oder einen Rest der Formel 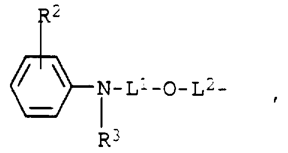 worin L¹, L², R² und R³ jeweils die obengenannte Bedeutung besitzen,
Q einen Rest der Formel 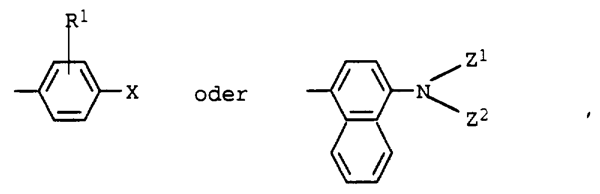 worin
R¹ die obengenannte Bedeutung besitzt,
X für Wasserstoff, C₁-C₄-Alkyl, C₁-C₄-Alkoxy oder einen Rest der Formel -NZ¹Z² und
Z¹ und Z² unabhängig voneinander jeweils für Wasserstoff oder C₁-C₄-Alkyl, das gegebenenfalls durch Hydroxy, C₁-C₄-Alkoxy, Halogen oder Cyano substituiert ist, oder gegebenenfalls substituiertes Phenyl stehen, und
An^{⊖} das Äquivalent eines Anions bedeuten.

2. Triarylmethane nach Anspruch 1, dadurch gekennzeichnet, daß m 2 bis 30 bedeutet.

3. Triarylmethane nach Anspruch 1, dadurch gekennzeichnet, daß L¹ und L² unabhängig voneinander jeweils C₂- oder C₃-Alkylen bedeuten.

4. Triarylmethane nach Anspruch 1, dadurch gekennzeichnet, daß R¹ und R² unabhängig voneinander jeweils Wasserstoff oder C₁-C₄-Alkyl bedeuten.

5. Triarylmethane nach Anspruch 1, dadurch gekennzeichnet, daß R³ jeweils C₁-C₂-Alkyl bedeutet.

6. Triarylmethane nach Anspruch 1, dadurch gekennzeichnet, daß R⁴ und R⁶ unabhängig voneinander jeweils C₁-C₄-Alkyl und R⁵ und R⁷ unabhängig voneinander jeweils C₁-C₄-Alkyl, das gegebenenfalls durch Hydroxy oder Cyano substituiert ist, oder einen Rest der Formel 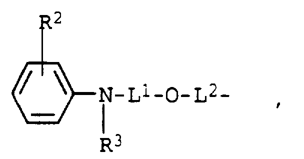 worin L¹, L², R² und R³ jeweils die in Anspruch 1 genannte Bedeutung besitzen,
bedeuten.

7. Triarylmethane nach Anspruch 1, dadurch gekennzeichnet, daß Q einen Rest der Formel 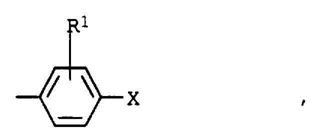 bedeutet, worin R¹ und X jeweils die in Anspruch 1 genannte Bedeutung besitzen.

8. Triarylmethane nach Anspruch 1, dadurch gekennzeichnet, daß Q einen Rest der Formel 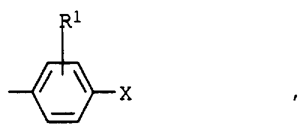 bedeutet, worin R¹ für Wasserstoff oder C₁-C₄-Alkyl und X für Wasserstoff oder einen Rest der Formel -NZ¹Z² stehen, wobei Z¹ und Z² unabhangig voneinander jeweils die Bedeutung von C₁-C₄-Alkyl, das gegebenenfalls durch Hydroxy oder Cyano substituiert ist, besitzen.

9. Verwendung der Triarylmethane gemäß Anspruch 1 zum Färben oder Bedrucken von polymerem Material.

## Claims

1. Triarylmethanes of the formula I 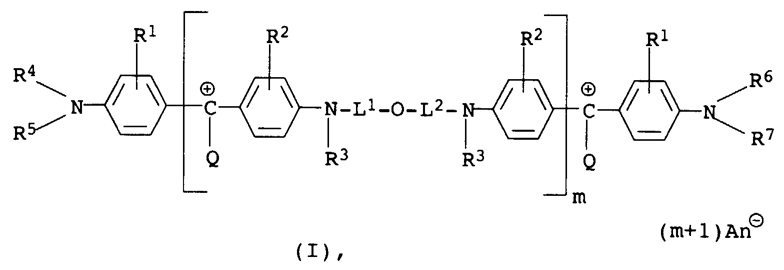 where
m is from 1 to 100,
L¹ and L² are independently of each other C₂-C₄-alkylene,
R¹ and R² are independently of each other hydrogen, C₁-C₄-alkyl, C₁-C₄-alkoxy or halogen,
R³ is in each case hydrogen or C₁-C₄-alkyl, which may be substituted by hydroxyl, C₁-C₄-alkoxy, halogen or cyano,
R⁴, R⁵, R⁶ and R⁷ are independently of one another hydrogen, C₁-C₄-alkyl, which may be hydroxyl-, C₁-C₄-alkoxy-, halogen- or cyano-substituted, substituted or unsubstituted phenyl or a radical of the formula 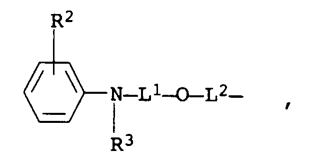 where L¹, L², R² and R³ are each as defined above,
Q is a radical of the formula 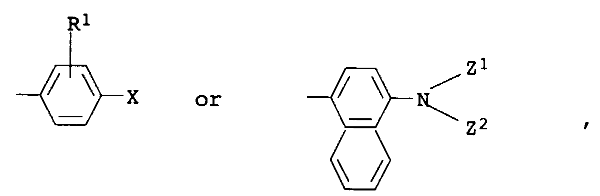 where
R¹ is as defined above,
X is hydrogen, C₁-C₄-alkyl, C₁-C₄-alkoxy or a radical of the formula -NZ¹Z², and
Z¹ and Z² are independently of each other hydrogen or C₁-C₄-alkyl, which may be hydroxyl-, C₁-C₄-alkoxy-, halogen- or cyano-substituted, or substituted or unsubstituted phenyl, and
An^{⊖} is the equivalent of an anion.

2. Triarylmethanes as claimed in claim 1 wherein m is from 2 to 30.

3. Triarylmethanes as claimed in claim 1 wherein L¹ and L² are independently of each other C₂- or C₃-alkylene.

4. Triarylmethanes as claimed in claim 1 wherein R¹ and R² are independently of each other hydrogen or C₁-C₄-alkyl.

5. Triarylmethanes as claimed in claim 1 wherein R³ is in each case C₁-C₂-alkyl.

6. Triarylmethanes as claimed in claim 1 wherein R⁴ and R⁶ are independently of each other C₁-C₄-alkyl and R⁵ and R⁷ are independently of each other C₁-C₄-alkyl, which may be hydroxyl- or cyano-substituted, or a radical of the formula 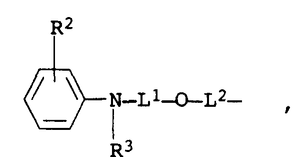 where L¹, L², R² and R³ are each as defined in claim 1.

7. Triarylmethanes as claimed in claim 1 wherein Q is a radical of the formula 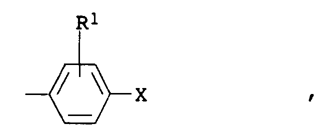 where R¹ and X are each as defined in claim 1.

8. Triarylmethanes as claimed in claim 1 wherein Q is a radical of the formula 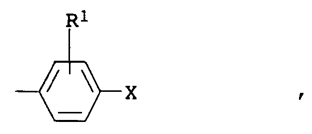 where R¹ is hydrogen or C₁-C₄-alkyl and X is hydrogen or a radical of the formula -NZ¹Z² where Z¹ and Z² are independently of each other C₁-C₄-alkyl, which may be substituted by hydroxyl or cyano.

9. The use of the triarylmethanes of claim 1 for dyeing or printing polymeric material.

## Revendications

1. Triarylméthane de formule I 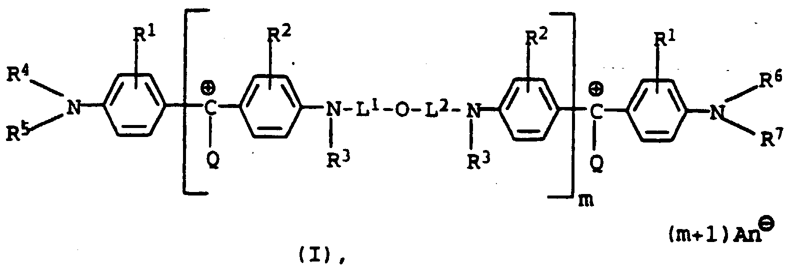 dans laquelle
m vaut de 1 à 100,
L¹ et L² représentent chacun indépendamment l'un de l'autre un groupement alkylène en C₂-C₄ ,
R¹ et R² représentent chacun indépendamment l'un de l'autre un atome d'hydrogène, un groupement alkyle en C₁-C₄ , alcoxy en C₁-C₄ ou un atome d'halogène,
R³ représente à chaque fois un atome d'hydrogène ou un groupement alkyle en C₁-C₄ éventuellement substitué par un groupement hydroxy, alcoxy en C₁-C₄ , par un atome d'halogène ou un groupement cyano,
R⁴, R⁵, R⁶ et R⁷ représentent chacun indépendamment les uns des autres un atome d'hydrogène, un groupement alkyle en C₁-C₄ éventuellement substitué par un groupement hydroxy, alcoxy en C₁-C₄, par un atome d'halogène ou un groupement cyano, un groupement phényle éventuellement substitué ou un reste de formule 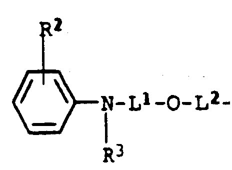 dans laquelle L¹, L², R² et R³ prennent chacun la signification susmentionnée,
Q représente un reste de formule 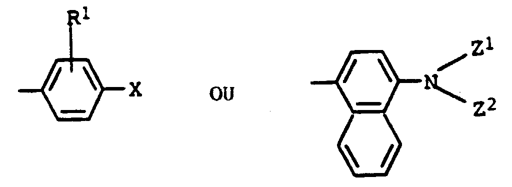 où
R¹ prend la signification susmentionnée,
X est mis pour un atome d'hydrogène, un groupement alkyle en C₁-C₄, alcoxy en C₁₋C₄ ou un reste de formule -NZ¹ Z² et
Z¹ et Z² sont mis chacun indépendamment l'un de l'autre pour un atome d'hydrogène ou un groupement alkyle en C₁₋C₄ éventuellement substitué par un groupement hydroxy, alcoxy en C₁₋C₄, par un atome d'halogène ou un groupement cyano, ou bien pour un groupement phényle éventuellement substitué, et
An ^{⊖} représente l'équivalent d'un anion.

2. Triarylméthane selon la revendication 1, caractérisé en ce que m vaut de 2 à 30.

3. Triarylméthane selon la revendication 1, caractérisé en ce que L¹ et L² représentent chacun indépendamment l'un de l'autre un groupement alkylène en C₂ ou en C₃.

4. Triarylméthane selon la revendication 1, caractérisé en ce que R¹ et R² représentent chacun indépendamment l'un de l'autre un atome d'hydrogène ou un groupement alkyle en C₁-C₄.

5. Triarylméthane selon la revendication 1, caractérisé en ce que R³ représente à chaque fois un groupement alkyle en C₁-C₂.

6. Triarylméthane selon la revendication 1, caractérisé en ce que R⁴ et R⁶ représentent chacun indépendamment l'un de l'autre un groupement alkyle en C₁-C₄ et R⁵ et R⁷ représentent chacun indépendamment l'un de l'autre un groupement alkyle en C₁-C₄ éventuellement substitué par des groupements hydroxy ou cyano, ou un reste de formule 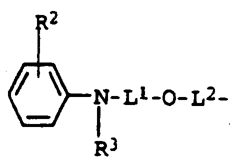 où L¹, L², R² et R³ prennent chacun la signification mentionnée dans la revendication 1.

7. Triarylméthane selon la revendication 1, caractérisé en ce que Q représente un reste de formule 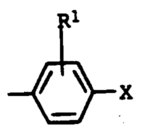 dans laquelle R¹ et X prennent chacun la signification mentionnée dans la revendication 1.

8. Triarylméthane selon la revendication 1, caractérisé en ce que Q représente un reste de formule 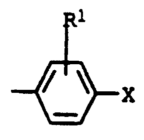 dans laquelle R¹ représente un atome d'hydrogène ou un groupement alkyle en C₁-C₄ et X représente un atome d'hydrogène ou un reste de formule -NZ¹ Z², où Z¹ et Z² prennent chacun indépendamment l'un de l'autre la signification d'un groupement alkyle en C₁-C₄ éventuellement substitué par des groupements hydroxy ou cyano.

9. Utilisation du triarylméthane selon la revendication 1 pour l'impression ou la teinture de matériaux polymères.
